# EUROPÄISCHE PATENTANMELDUNG

(11) **EP 3 456 985 A1**
(43) Veröffentlichungstag der Anmeldung: **20.03.2019**
(21) Anmeldenummer: 18194825.8
(22) Anmeldetag: 17.09.2018
(51) Int. Cl.: F16B 2/18, F16B 2/14

(54) **BEFESTIGUNGSVORRICHTUNG ZUR BEFESTIGUNG EINER BÜROTECHNIKVORRICHTUNG SOWIE STECKDOSENVORRICHTUNG ZUR BEFESTIGUNG AN EINEM PLATTENELEMENT MIT EINER BEFESTIGUNGSVORRICHTUNG**

(30) Priorität: 19.09.2017 DE 102017216592
(71) Anmelder: A. & H. Meyer GmbH Leuchten und Büroelektrik, 32694 Dörentrup (DE)
(72) Erfinder: Demirtas, Ibrahim, 32805 Horn-Bad Meinberg (DE)
(74) Vertreter: dompatent von Kreisler Selting Werner - Partnerschaft von Patent- und Rechtsanwälten mbB

(57) **Zusammenfassung**

Die vorliegende Erfindung betrifft eine Befestigungsvorrichtung (2) zur Befestigung einer Bürotechnikvorrichtung (1) an einem Plattenelement (3) vorzugsweise eines Einrichtungsgegenstandes mit einem Grundkörper (4) der eine erste Anlagefläche (4a) bildet und mit einer Verstelleinrichtung (5),
- wobei die Verstelleinrichtung (5) eine der ersten Anlagefläche (4a) gegenüberliegende zweite Anlagefläche (4b) aufweist;
- wobei zwischen der ersten Anlagefläche (4a) und der gegenüberliegen zweiten Anlagefläche (4b) ein Abstand (D) gebildet ist,
- wobei das Plattenelement (3) zwischen den Anlageflächen (4a,4b) aufnehmbar ist, und
- wobei der Abstand (D) der zweiten Anlagefläche (4b) relativ zu der ersten Anlagefläche (4a) über die Verstelleinrichtung (5) einstellbar ist,
- wobei die Verstelleinrichtung (5) eine Klemmeinrichtung (52) mit einer Klemmfläche (53) aufweist, wobei die Klemmfläche (53) gegenüber der zweiten Anlagefläche (4b) in Richtung des Plattenelements (3) zur Aufbringung einer Klemmkraft verstellbar ist und das Plattenelement (3) zwischen der ersten Anlagefläche (4a) und der Klemmfläche (53) mittels der Klemmkraft klemmbar ist.

## Beschreibung

Die Erfindung betrifft eine Befestigungsvorrichtung zur Befestigung einer Bürotechnikvorrichtung an einem Plattenelement sowie eine Steckdosenvorrichtung zur Befestigung an einem Plattenelement mit einer erfindungsgemäßen Befestigungsvorrichtung .

Aus dem Stand der Technik ist es bekannt Bürotechnikvorrichtungen, wie beispielsweise Steckdosenleisten oder Anschlussbuchsen für den Bereich der IT- und EDV-Technik, sowie elektrische Kontrollelemente zur Gebäudesteuerung in Einrichtungsgegenständen zu installieren bzw. in diese zu integrieren. Um den Nutzern eine höhere Flexibilität, als auch eine Nachrüstung von Einrichtungsgegenständen mit den vorgenannten Bürotechnikvorrichtungen zu ermöglichen, ist es ebenfalls bekannt, die Bürotechnikvorrichtungen mittels Befestigungsvorrichtungen an den Einrichtungsgegenständen temporär zu befestigen. Vorbekannte Befestigungsvorrichtungen werden beispielsweise zur Befestigung einer Bürotechnikvorrichtung an einer Tischplatte verwendet und verfügen über einen Grundkörper, der beispielsweise mit einer Spannschraube zusammenwirkt. Die Spannschraube weist eine erste Anlagefläche auf, die mit einer zweiten Anlagefläche an dem Grundkörper zusammenwirkt. Die Tischplatte wird zwischen dem Grundkörper und der Spannschraube geklemmt.

Gemäß dem vorgenannten Stand der Technik ist vorgesehen, dass zur Anpassung der Befestigungsvorrichtung an der Tischplatte der Abstand zwischen der ersten und zweiten Anlagenfläche mittels der Spannschraube verändert wird. Somit ist es notwendig, mittels der Spannschraube zunächst den Abstand zwischen der ersten und zweiten Anlagefläche in Abhängigkeit der Dicke der Tischplatte anzupassen. Dabei müssen mittels der Spannschraube große Wege überwunden werden. Gleichzeitig muss über die vorgenannte Spannschraube aber auch eine möglichst hohe Klemmkraft zur Befestigung der Bürotechnikvorrichtung an der Tischplatte aufgebracht werden, was bei einer langen Spannschraube zu Schwierigkeiten führen kann. um einen sicheren Halt zu gewährleisten. Nachteilig bei den aus dem Stand der bekannten Technik bekannten Verstelleinrichtungen ist, dass diese entweder nur einen geringen Einstellbereich aufweisen und damit nur eine geringe Variation der Plattendicke zulassen oder andernfalls einen großen Verstellbereich aufweisen, wobei aber nur eine relativ geringe Klemmkraft realisiert werden kann.

Der Erfindung liegt daher die Aufgabe zugrunde, eine Befestigungsvorrichtung zur Befestigung einer Bürotechnikvorrichtung an einem Plattenelement sowie eine Steckdosenvorrichtung mit einer derartigen Befestigungsvorrichtung zu schaffen, welche eine einfachere Anpassung der Befestigungsvorrichtung an das Plattenelement, an welchem die Befestigung erfolgen soll, ermöglicht, wobei gleichzeitig eine sichere Aufbringung der benötigten Klemmkraft realisiert werden kann.

Zur Lösung der Aufgabe dienen die Merkmale des Anspruchs 1 sowie des Anspruchs 13.

Erfindungsgemäß ist bei einer Befestigungsvorrichtung zur Befestigung einer Bürotechnikvorrichtung an einem Plattenelement, vorzugsweise eines Einrichtungsgegenstandes, ein Grundkörper, der eine erste Anlagefläche bildet, und eine Verstelleinrichtung ausgebildet. Die Verstelleinrichtung weist eine der ersten Anlagefläche gegenüberliegende zweite Anlagefläche auf, wobei zwischen der ersten Anlagefläche und der gegenüberliegen zweiten Anlagefläche ein Abstand gebildet ist, wobei das Plattenelement zwischen den Anlageflächen aufnehmbar ist, und wobei der Abstand der zweiten Anlagefläche relativ zu der ersten Anlagefläche über die Verstelleinrichtung einstellbar ist.

Die Erfindung ist dadurch gekennzeichnet, dass die Verstelleinrichtung eine Klemmeinrichtung mit einer Klemmfläche aufweist, wobei die Klemmfläche gegenüber der zweiten Anlagenfläche in Richtung des Plattenelements zur Aufbringung einer Klemmkraft verstellbar ist und das Plattenelement zwischen der ersten Anlagefläche und der Klemmfläche mittels der Klemmkraft klemmbar ist.

Die erfindungsgemäße Ausgestaltungsform weist dabei den Vorteil auf, dass die Verstelleinrichtung zur Einstellung des Abstandes zwischen der ersten und zweiten Anlagenfläche zur Anpassung an das aufzunehmende und zu verklemmende Plattenelement derart ausgestaltet ist, dass die Klemmvorrichtung bei der Einstellung des Abstandes mittels der Verstelleinrichtung mitgeführt wird. Die Klemmeinrichtung ist an der Verstelleinrichtung derart ausgebildet, dass die Betätigung der Klemmeinrichtung und damit die Erzeugung der Klemmkraft unabhängig von der Einstellung des Abstandes mit der Verstelleinrichtung vorgenommen werden kann. Die auf das Plattenelement durch die Klemmvorrichtung aufgebrachte Klemmkraft wird dabei von der Klemmeinrichtung über die Einstelleinrichtung an den Grundkörper der Befestigungsvorrichtung übertragen. Somit erfolgt die Anpassung des Abstands der beiden Anlageflächen nunmehr unabhängig von der Betätigung der Klemmeinrichtung und somit losgelöst von dem Vorgang der Erzeugung der Klemmkraft. Die Erfindung ermöglicht nunmehr den Abstand zwischen den Anlagenflächen in einem ersten Schritte über die Verstelleinrichtung auf einfachere Art und Weise voreinzustellen und in einem zweiten Schritt über die Klemmeinrichtung die Klemmkraft auf das Plattenelement aufzubringen.

Bei dem Einrichtungsgegenstand kann es sich dabei um jegliche Möbelstücke, wie beispielsweise einen Schreibtisch oder ein Regal, handeln. Weiterhin kommen als Einrichtungsgegenstand zur Befestigung im Sinne der vorliegenden Erfindung jegliche Gegenstände in Betracht, welche üblicherweise im Einrichtungsbereich genutzt werden und an denen die Befestigung einer Bürotechnikvorrichtung sinnvoll erscheint. Insbesondere kann es sich jedoch auch bei dem Einrichtungsgegenstand um eine Fensterbank oder ein alternatives ortsfestes Plattenelement handeln.

Bei der Bürotechnikvorrichtung kann es sich insbesondere um eine Steckdosenvorrichtung zur Energieversorgung, aber auch um jegliche Anschlussvorrichtungen aus dem IT- bzw. EDV-Bereich, beispielsweise um eine Netzwerk-Anschlussdose, eine TAE (Telekommunikations-Anschluss-Einheit)-Anschlussdose oder eine USB-Anschlussdose handeln. Bei der Bürotechnikvorrichtung kann es sich auch um eine Kombination der vorgenannten Gegenstände handeln. Weiterhin kann die Bürotechnikvorrichtung eine Beleuchtungsvorrichtung, wie beispielsweise eine Arbeitsplatzleuchte oder Schreibtischleuchte, sein.

Der Grundkörper der Befestigungsvorrichtung kann in einer bevorzugten Ausführungsform C-förmig mit zwei gegenüberliegenden Schenkelflächen ausgebildet werden, wobei das einzuklemmende Plattenelement zwischen den beiden Schenkelflächen aufgenommen und verklemmt wird.

Es ist dabei möglich, den Grundkörper aus einem Metall, insbesondere aus einer Stahl- oder Aluminiumlegierung zu fertigen. Dabei kann insbesondere vorgesehen sein, dass der Grundkörper aus einem Flachmetall besteht, der beispielsweise über einen Biege-, Abkant- oder sonstigen mechanischen Umformprozess hergestellt wird.

In einer bevorzugten Ausführungsform kann die Verstelleinrichtung einen Führungskörper sowie eine gegenüber dem Führungskörper verschiebbare Anlageeinrichtung aufweisen, wobei die zweite Anlagefläche an einer dem Plattenelement zugewandten Fläche der Anlageeinrichtung ausgebildet ist und wobei durch Verschiebung der Anlageeinrichtung relativ zu dem Führungskörper der Abstand zwischen der ersten und zweiten Anlagefläche einstellbar ist.

Dabei kann es vorgesehen sein, dass der Führungskörper einstückig mit dem Grundkörper der Befestigungsvorrichtung mit einem definierten Abstand gegenüberliegend der ersten Anlagefläche ausgebildet ist. Eine derartige einstückige Ausführungsform kann beispielsweise als Gussteil realisiert werden.

In einer alternativen Ausführungsform kann der Führungskörper als zu dem Grundkörper der Befestigungsvorrichtung separates Bauteil ausgestaltet werden, wobei es vorgesehen sein kann, den Führungskörper an einer der ersten Anlagefläche gegenüberliegenden Seite des Grundkörpers zu befestigen. Die Befestigung kann dabei mittels üblicher Befestigungsmittel, und/oder durch eine Klebeverbindung realisiert werden.

Die Anlageeinrichtung und der Führungskörper können, einander zugewandte und aneinander angepasste erste und zweite Rampen aufweisen, wobei die Rampen aneinander anliegen. Die Rampen können Rampenflächen auf weisen, die gegenüber der Oberfläche des zu klemmenden Plattenelements geneigt sind, so dass bei einer Relativverschiebung der ersten zu der zweiten Rampe die Höhe der Verstelleinrichtung veränderbar ist. Vorzugsweise weisen dabei die Rampenflächeneinen kontinuierlichen Verlauf auf. Dadurch ist eine stufenlose Verstellung möglich. Die Rampen können auch Rampenflächen mit unterschiedlichen Neigungen bzw. Steigungen über deren Verlauf aufweisen.

Die Rampenflächen müssen nicht notwendigerweise über ein kontinuierlichen Verlauf verfügen, sondern können vielmehr auch gestuft verlaufen, wobei Teilabschnitte der Rampenflächen im Wesentlichen parallel zur der Oberfläche des zu klemmenden Plattenelements verlaufen können. Insbesondere können die Rampen auch einen treppenförmig ansteigenden Verlauf aufweisen. Die Ausgestaltung der ersten und zweiten Rampe ermöglicht dabei eine einfache Verstellung des Abstandes zwischen der ersten und zweiten Anlagenfläche, wobei die Einstellung insbesondere werkzeuglos erfolgen kann. Durch die Verlagerung der ersten und zweiten Rampen zueinander, lässt sich die resultierende Höhe der Verstelleinrichtung und damit der Abstand zwischen der ersten und zweiten Anlagefläche einstellen. Durch die Anlage der aneinander angepassten ersten und zweiten Rampen ist es möglich eine Selbsthemmung der Anlageeinrichtung relativ zu dem Führungskörper zu realisieren, indem eine Haftreibung zwischen den beiden Rampen erzeugt wird, welche die Verschiebung der Anlageeinrichtung relativ zu dem Führungskörper hemmt bzw. diese blockiert. Die Haftreibung kann dabei über einen Kraftschluss der zueinander gewandten und aneinander anliegenden Oberflächen der ersten und zweiten Rampe, sowie über die Werkstoffpaarung der Rampen und insbesondere über deren Oberflächenrauigkeit beeinflusst werden.

Insbesondere kann es vorgesehen sein, die aneinander anliegenden Rampen mit einer reibungserhöhenden Oberflächenbeschichtung auszugestalten, wodurch die Haftreibung zwischen den beiden Rampenelementen weiter erhöht wird. Dabei ist es möglich die Haftreibung zwischen den beiden Rampenelementen derart zu erhöhen, dass bei Aufbringung der Klemmkraft auf das Plattenelement die zwischen den beiden Rampenelementen wirkende Haftreibung derart hoch ist, dass sich diese nicht gegeneinander verschieben.

Vorteilhafterweise kann es vorgesehen sein, dass die ersten und zweiten Rampen jeweils aneinander angepasste Rastprofile aufweisen, worüber der Abstand zwischen der ersten und zweiten Anlagefläche in Stufen einstellbar ist. Die Rastprofile weisen dabei den Vorteil auf, dass die Verschiebung der Anlageeinrichtung relativ zu dem Führungskörper besser gehemmt werden kann. Die Rastprofile können dabei eine Vielzahl von Rastpositionen aufweisen, welche beispielsweise durch gegenüber liegende Erhöhungen und Vertiefungen ausgebildet werden.

In einer besonders bevorzugten Ausgestaltungsform können die aneinander angepassten Rastprofile als Stufenprofile ausgebildet werden. Die Stufenprofile können dabei beispielsweise als rechtwinkelige Profile ausgestaltet werden, wobei erste Tragflanken des Stufenprofils im Wesentlichen parallel zu der zu klemmenden Oberfläche des Plattenelementes verlaufen, so dass die Tragflanken orthogonal zu der Richtung der auf das Plattenelement aufzubringenden Klemmkraft ausgerichtet sind. Die vorgenannte Ausrichtung der Tragflanken weist dabei den Vorteil auf, dass die auf das Plattenelement aufgebrachte Klemmkraft als Normalkraft über die Tragflanken des Stufenprofils an den Führungskörper der Einstelleinrichtung übertragen wird. Die Lastübertragung der Klemmkraft erfolgt dabei über eine Vielzahl von Tragflanken, derart dass die auftretenden lokalen Spannungen im Bereich des Stufenprofils reduziert werden können. Aufgrund der Ausrichtung der Tragflanken im Wesentlichen parallel zu der Oberfläche des zu klemmenden Plattenelements wird die Klemmkraft als Normalkraft auf die Tragflanken übertragen. Dadurch dass die Klemmkraft als Normalkraft über die Rampen und insbesondere deren Tragflanken übertragen wird ist gleichzeitig gewährleistet, dass alle Tragflanken mit der gleichen Kraftbetrag belastet werden und die Gesamtklemmkraft gleichmäßig auf alle Tragflanken aufgeteilt übertragen wird. i. Eine Aufbringung von Biegekräften oder -momenten auf die Tragflanken oder die Rampenstruktur wird damit vermieden.

Weiterhin kann vorgesehen sein, dass der Führungskörper eine Begrenzungseinrichtung und die Anlageeinrichtung eine an die Begrenzungseinrichtung angepasste Anschlageinrichtung aufweist, wobei die Begrenzungseinrichtung zusammen mit der Anschlageinrichtung die Verschiebung der Anlageeinrichtung relativ zu dem Führungskörper begrenzt. Die Begrenzung der Verschiebung mittels der Begrenzungseinrichtung mit der angepassten Anschlageinrichtung weist dabei den Vorteil auf, dass die Anlageeinrichtung relativ zu dem Führungskörper lediglich um einen definierten Betrag verschoben werden kann. Insbesondere wird vermieden, dass sich die Anlageeinrichtung während der Verschiebung relativ zum Führungskörper von diesem löst. Weiterhin ist es möglich zumindest die zulässige Verschiebung der Anlageeinrichtung in Normalrichtung der zu klemmenden Oberfläche der Möbelplatte zu begrenzen.

Die Begrenzungseinrichtung kann ebenso an der Anlageeinrichtung und die Anschlageinrichtung an dem Führungskörper ausgebildet werden, was einer Umkehrung der Anordnung der vorgenannten Elemente entspricht.

Es kann vorgesehen sein, dass die Klemmeinrichtung eine Exzenterwalze mit kreisförmigem Querschnitt und einer Exzenterwalzenoberfläche aufweist, welche die Klemmfläche bildet, wobei die Exzenterwalze im Bereich der zweiten Anlagefläche an der Anlageeinrichtung drehbar um eine exzentrische Rotationsachse gelagert ist. Bei der exzentrischen Lagerung verläuft die Rotationsachse der Exzenterwalze in einem Abstand zu dem Mittelpunkt des kreisförmigen Querschnitts der Exzenterwalze. Dabei kann die Rotationsachse der Exzenterwalze insbesondere parallel zu der der Exzenterwalzenoberfläche zugewandten Oberfläche des Plattenelements verlaufen. Die Exzenterwalzenoberfläche dient dabei der Anlage an der Oberfläche des Plattenelements und der Aufbringung von Klemmkräften auf die vorgenannte Oberfläche.

Wenn nun die Befestigungsvorrichtung an einem Plattenelement befestigt werden soll, so wird zunächst über die Verstelleinrichtung der Abstand zwischen der ersten und zweiten Anlagenfläche eingestellt, so dass die zweite Anlagefläche an der Oberfläche des zu befestigenden Plattenelements in Anlage kommt oder mit geringer Distanz zu dieser verläuft. Der Abstand der ersten Anlagenfläche zu der zweiten Anlagenfläche entspricht dabei im Wesentlichen der Dicke des aufgenommenen Plattenelements. Die Exzenterwalze ist zunächst derart ausgerichtet, dass die als Exzenterwalzenoberfläche ausgebildete Klemmfläche der Klemmeinrichtung mit der zweiten Anlagenfläche bündig verläuft oder relativ zu dieser einen Rücksprung bildet. In dieser Stellung weist bevorzugt der kleinste Abstand zwischen der Exzenterwalzenoberfläche und der Rotationsachse der Exzenterwalze in Richtung der zu klemmenden Oberfläche des Plattenelements. Zur Aufbringung einer Klemmkraft auf das Plattenelement wird die Exzenterwalze gedreht, wobei die Exzenterwalzenoberfläche aufgrund deren exzentrischen Lagerung in Richtung der zu klemmenden Oberfläche des Plattenelements zunehmend über die zweite Anlagenfläche vortritt. Der zuvor über die Verstelleinrichtung eingestellte Abstand zwischen der ersten und zweiten Anlagenfläche bleibt dabei unverändert. Die Exzenterwalze wird dabei derart verdreht, dass sich in Richtung der Oberfläche des Plattenelements der Abstand zwischen Rotationsachse und der Exzenterwalzenoberfläche zunehmend vergrößert. Durch das Vortreten der Exzenterwalzenoberfläche drückt diese gegen das Plattenelement und es wird zwischen der ersten Anlagenfläche und der Exzenterwalzenoberfläche eingeklemmt. Auf die Oberfläche des Plattenelements wird hierbei eine Klemmkraft aufgebracht. Die größte Klemmkraft wird dabei ausgeübt, wenn der größte Abstand zwischen der Exzenterwalzenoberfläche und der Rotationsachse in Richtung der Oberfläche des Plattenelements ausgerichtet ist.

In einer vorteilhaften Aufführungsform kann es vorgesehen sein, dass die Exzenterwalze eine erste Ausgangsposition aufweist, in welcher ein erster Abstand zwischen der Exzenterwalzenoberfläche und der Rotationsachse dem zu klemmenden Plattenelement zugewandt ist und/oder eine zweite Klemmposition aufweist, in welcher ein zweiter Abstand zwischen der Exzenterwalzenoberfläche und der Rotationsachse dem zu klemmenden Plattenelement zugewandt ist, wobei der Wert des zweiten Abstandes größer als der Wert des ersten Abstandes ist.

Es kann vorgesehen sein, dass an der Exzenterwalze ein Betätigungselement ausgebildet ist mittels dem die Exzenterwalze drehbar ist. Die Ausgestaltung eines Betätigungselementes weist dabei den Vorteil auf, dass die Klemmeinrichtung werkzeuglos betätigt und die Klemmkraft durch Verdrehung der Exzenterwalze mittels des Betätigungselementes auf das Plattenelement aufgebracht werden kann.

Das Betätigungselement kann insbesondere als bogenförmiges sich nach außen erstreckendes Hebelelement ausgebildet werden. Der Betätigungshebel kann dabei vorteilhafterweise eine Verdrehung der Exzenterwalze um 180° ermöglichen, wobei in einer Ausgangsstellung der Exzenterwalze ein erster Abstand zwischen der Rotationsachse und der Exzenterwalzenoberfläche in Richtung der Fläche des zu klemmenden Plattenelementes ausgerichtet ist, wobei keine Klemmkraft auf das zu klemmende Plattenelement aufgebracht ist. Wohingegen in einer Endstellung der Exzenterwalze ein zweiter Abstand zwischen der Rotationsachse und der Exzenterwalzenoberfläche in Richtung der Oberfläche des zu klemmenden Plattenelementes ausgerichtet ist, wodurch die größte Klemmkraft ausgeübt wird. Der zweite Abstand ist dabei größer als der erste Abstand und wobei der zweite Abstand den größten Abstand zwischen der Rotationsachse und der Exzenterwalze sowie der erste Abstand den kleinsten Abstand zwischen Rotationsachse und Exzenterwalzenoberfläche darstellt. Die Ausbildung des Betätigungselements als Hebelelement weist den Vorteil auf, dass aufgrund des Abstandes zwischen einem Angriffsbereich an dem Hebelelement und der Rotationsachse der Exzenterwalze auch bei werkzeugloser Betätigung der Exzenterwalze hohe Klemmkräfte auf das Plattenelement aufgebracht werden können, aber gleichzeitig die Exzenterwalze ohne großen Kraftaufwand verdreht werden kann.

In einer weiteren bevorzugten Ausführungsform kann es vorgesehen sein, dass die Exzenterwalzenoberfläche mindestens einen abgeflachten Oberflächenteilbereich aufweist.

Besonders bevorzugt kann die Ausbildung der Abflachung des Oberflächenteilbereiches in dem Abschnitt des größten Abstandes zwischen der Exzenterwalzenoberfläche und der Rotationsachse der Exzenterwalze vorgesehen werden, so, dass eine Verriegelung bzw. eine Rastposition der Exzenterwalze ausgebildet ist, wenn sich diese in der Klemmposition befindet. Der abgeflachte Oberflächenteilbereich legt sich dabei an die zu klemmende Oberfläche des Plattenelements flach an. Zur Verdrehung der Exzenterwalze aus der vorgenannten Position, ist es erforderlich ein erhöhtes Drehmoment auf die Exzenterwalze aufzubringen, um Kanten des abgeflachten Bereiches bei der Drehung zu überwinden. Dadurch wird eine Verdrehsicherung gebildet.

Es ist in weiteren Ausführungsformen ebenfalls möglich mehrere abgeflachte Oberflächenteilbereiche beabstandet oder benachbart über den Umfang der Exzenterwalze auszubilden, derart dass eine stufenweise Aufbringung der Klemmkraft auf die Fläche des zu klemmenden Plattenelementes erfolgt und gleichzeitig eine Rastung bzw. Blockierung der Exzenterwalze innerhalb der unterschiedlichen Klemmkraftpositionen realisiert wird.

Weiterhin kann es vorgesehen sein, dass die Exzenterwalzenoberfläche bei Ausrichtung des Bereichs des kleinsten Abstandes zwischen der Rotationsachse und der Exzenterwalzenoberfläche zu dem Plattenelement bündig mit oder rückgezogen zu der zweiten Anlagefläche verläuft. Erst bei einer Verlagerung der Exzenterwalze aus der vorgenannten Position heraus tritt die Exzenterwalzenoberfläche in Richtung des Plattenelements in Bezug auf die zweite Anlagefläche hervor.

Besonders bevorzugt kann vorgesehen sein, dass die erste und/oder zweite Anlagefläche zumindest teilweise eine Reibkraft erhöhende Beschichtung aufweist. Durch die Reibkraft erhöhende Beschichtung wird ein Abrutschen der Befestigungsvorrichtung im geklemmten Zustand von dem Plattenelement sicher unterbunden.

Die Erfindung sieht ferner eine Steckdosenvorrichtung zur Befestigung an einem Plattenelement mit einer Befestigungsvorrichtung nach einem der vorhergehenden Ansprüche vor.

Es zeigen:
- Fig. 1: eine seitliche Schnittansicht der Bürotechnikvorrichtung mit einer Befestigungsvorrichtung, sowie
- Fig. 2: eine seitliche Schnittansicht der Bürotechnikvorrichtung mit Befestigungsvorrichtung in an einem Plattenelement befestigten Zustand.

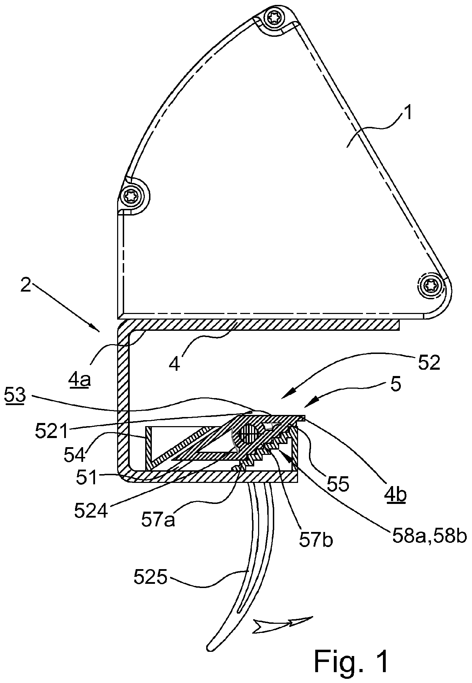

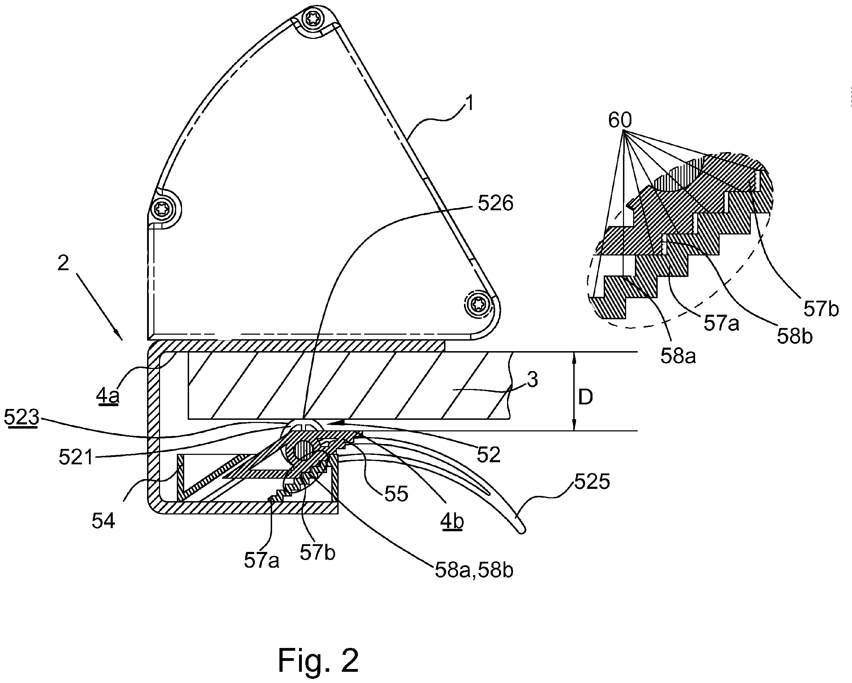

Die Fign. 1 und 2 zeigen eine Befestigungsvorrichtung 2 zur Befestigung einer Bürotechnikvorrichtung 1 an einem Plattenelement 3 vorzugsweise eines Einrichtungsgegenstandes (nicht dargestellt). Die Befestigungsvorrichtung 2 weist dabei einen Grundkörper 4 auf, der eine erste Anlagefläche 4a bildet und eine Verstelleinrichtung 5 umfasst. Die Verstelleinrichtung 5 weist eine der ersten Anlagefläche 4a gegenüberliegende zweite Anlagefläche 4b auf, wobei zwischen der ersten Anlagefläche 4a und der gegenüberliegenden zweiten Anlagefläche 4b ein Abstand D gebildet ist. In dem dargestellten Ausführungsbeispiel der Befestigungsvorrichtung 2 ist deren Grundkörper 4 aus einem einstückigen Flachmaterial, wie beispielsweise einem Flachmetall ausgestaltet. Der Grundkörper 4 weist einen im Wesentlichen C-förmigen Querschnitt mit zwei parallel zueinander verlaufenden Schenkelflächen auf, wobei die Innenseite der ersten Schenkelfläche die erste Anlagefläche 4a bildet und an der gegenüberliegenden Schenkelinnenseite der Führungskörper 54 als separates Bauteil zu dem Grundkörper 4 ausgebildet ist. Der Führungskörper 54 ist dabei mit dem Grundkörper 4 über mehrere (nicht dargestellte) Befestigungsmittel verbunden.

Wie dies aus Fig. 2 hervorgeht, ist das Plattenelement 3 zwischen den Anlageflächen 4a,4b aufnehmbar. Über die Verstelleinrichtung 5 kann der Abstand D zwischen der ersten und zweiten Anlagenfläche 4a,4b derart eingestellt werden, dass der Abstand D im Wesentlichen der Dicke des aufgenommenen Plattenelements 3 entspricht. In diesem Zustand liegt eine erste Oberfläche des Plattenelements 3 an der ersten Anlagenfläche 4a und die gegenüberliegende zweite Oberfläche des Plattenelements 3 an der zweiten Anlagenfläche 4b an bzw. verläuft in geringer Distanz zu dieser.

Die Verstelleinrichtung 5 weist eine Klemmeinrichtung 52 mit einer Klemmfläche 53 auf, wobei die Klemmfläche 53 gegenüber der zweiten Anlagefläche 4b in Richtung des Plattenelements 3 zur Aufbringung einer Klemmkraft verstellbar und das Plattenelement 3 zwischen der ersten Anlagefläche 4a und der Klemmfläche 53 mittels der Klemmkraft befestigbar ist.

In dem dargestellten Aufführungsbeispiel gemäß Fign. 1 und 2 weist die Verstelleinrichtung 5 einen Führungskörper 54 sowie eine gegenüber dem Führungskörper 54 verschiebbare Anlageeinrichtung 55 auf. Die zweite Anlagefläche ist dabei in dem dargestellten Ausführungsbeispiel an der dem Plattenelement 3 zugewandten Fläche der Anlageeinrichtung 55 ausgebildet. Dabei ermöglicht die Verschiebung der Anlageeinrichtung 55 relativ zu dem Führungskörper 54 den Abstand D zwischen der ersten und zweiten Anlagefläche 4a,4b einzustellen. Der Führungskörper 54 weist in dem Ausführungsbeispiel gemäß Figuren 1 und 2 eine Führungsschiene 51 auf, an deren oberen Ende ein in den Figuren nicht sichtbare Begrenzungseinrichtung ausgebildet ist, wobei an der Anlageeinrichtung 55 eine an die Begrenzungseinrichtung angepasste Anschlageinrichtung (nicht dargestellt) ausgebildet ist Durch die Kombination der Begrenzungseinrichtung und einer angepassten Anschlageinrichtung wird die maximal mögliche Verlagerung der Anlageeinrichtung in Richtung des zu klemmenden Plattenelements 3 relativ zu dem Führungskörper begrenzt.

In der dargestellten beispielhaften Ausführungsform weisen die Anlageeinrichtung 55 und der Führungskörper 54 aneinander zugewandte und aneinander angepasste erste und zweite Rampen 57a,57b auf, welche aneinander anliegen. Die ersten und zweiten Rampen 57a,57b weisen Rampenflächen mit aneinander angepasste Rastprofile 58a,58b in Form von Stufenprofilen auf. Wie aus Fign. 1 und 2 entnehmbar ist verfügen die Stufenprofile über eine Vielzahl von Tragflanken 60, welche parallel zu der zu klemmenden Oberfläche des Plattenelements 3 verlaufen. Die mittels der Klemmeinrichtung 52 auf das Plattenelement 3 aufgebrachte Klemmkraft wird dabei gleichmäßig über die Tragflanken 60 der Rampen 57a,57b des Führungskörpers 54 und der Anlageeinrichtung 55 übertragen. Gleichzeitig tritt durch die stufenförmige Ausbildung der Rastprofile 58a,58b eine Selbsthemmung der ersten und zweiten Rampen 57a,57b zueinander auf, so dass bei Krafteinwirkung durch die Klemmkraft keine Relativverschiebung der ersten zu der zweiten Rampe 57a,57b auftritt.

Die Klemmeinrichtung 52 ist als Exzenterwalze 521 mit im Wesentlichen kreisförmigem Querschnitt 522 ausgestaltet, wobei eine Exzenterwalzenoberfläche die Klemmfläche 53 der Klemmeinrichtung 5 bildet. Die Exzenterwalze 521 ist dabei im Bereich der zweiten Anlagefläche 4b an der Anlageeinrichtung 55 drehbar um eine exzentrische Rotationsachse 524 gelagert. In dem dargestellten Ausführungsbeispiel gemäß Figur 2 ist die Exzenterwalze 521 in einer Endposition dargestellt, in welcher der größte Abstand zwischen der Exzenterwalzenoberfläche 523 und der Rotationsachse 524 dem zu klemmenden Plattenelement 3 zugewandt ist. In dieser Endposition wird durch die Klemmeinrichtung 52 die höchste Klemmkraft auf das zu klemmende Plattenelement 3 aufgebracht. Weiterhin bildet die Exzenterwalzenoberfläche 523 in der in der Figur 2 dargestellten Endposition den größten Vorsprung gegenüber der zweiten Anlagenfläche 4 b der Anlageeinrichtung 55. In einer nicht dargestellten Ausgangsposition, in welcher die Exzenterwalze 521 gegenüber der in der Figur 2 dargestellten Ausrichtung um 180 Grad im Uhrzeigersinn verdreht ist verläuft die Exzenterwalzenoberfläche 523 bündig mit oder zurückgezogen zu der zweiten Anlagenfläche 4b. Bei der Einbringung des zu klemmenden Plattenelements 3 in die Befestigungsvorrichtung 2 ist die Exzenterwalze 521 in der nicht dargestellten Ausgangsposition ausgerichtet, derart, dass das zu klemmende Plattenelement 3 ungehindert in die Befestigungsvorrichtung 2 eingebracht werden kann. Erst nach erfolgter Einstellung des Abstands D zwischen der ersten und zweiten Anlagenfläche 4a,4b auf die Dicke des Plattenelements 3 über die Verstelleinrichtung 5 wird die Exzenterwalze 521 aus der Ausgangposition verdreht, so dass die Exzenterwalzenoberfläche 523 zunehmend über die zweiten Anlagenfläche 4b in Richtung des Plattenelements 3 vortritt und dadurch ein immer größer werdende Klemmkraft auf das Plattenelement 3 aufbringt. Die Figur 1 zeigt eine Zwischenposition der Exzenterwalze 521 zwischen der Ausgangs- und Endposition, in dieser weist die Exzenterwalze 521 bereits einen Vorsprung relativ zu der zweiten Anlagenfläche 4b auf.

An der Exzenterwalze 521 ist weiterhin das flügelförmige Betätigungselement 525 ausgebildet, mittels dessen die Exzenterwalze 521 betätigbar bzw. verdrehbar ist. Die dargestellte Ausführungsform ermöglicht dabei eine werkzeuglose Verstellung der Klemmeinrichtung 52 aufgrund der Länge und insbesondere aufgrund des Abstandes der Angriffspunktes des Betätigungselementes 525 relativ zu der Rotationsachse 524 der Exzenterwalze 521 ist es möglich eine Hebelwirkung des Betätigungselementes 525 zu erzeugen, um die Exzenterwalze 521 unter einem geringen Lastaufwand zu verdrehen bzw. zu verlagern.

Die Exzenterwalzenoberfläche 523 weist dabei in den dargestellten Ausführungsbeispiele einen abgeflachten Oberflächenteilbereich 526 auf, wobei der abgeflachte Oberflächenteilbereich der Exzenterwalze 521 im Bereich des größten Abstandes zwischen der Exzenterwalzenoberfläche 523 und der Rotationsachse 524 angeordnet ist. In der in Figur 2 dargestellten Endposition der Exzenterwalze , in der die höchste Klemmkraft auf den zu klemmenden Gegenstand 3aufgebracht wird, liegt der abgeflachte Oberflächenteilbereich 526 an dem zu klemmenden Gegenstand 3 flach an und es wird eine Verdrehsicherung für die Exzenterwalze 521 gebildet.

## Patentansprüche

1. Befestigungsvorrichtung (2) zur Befestigung einer Bürotechnikvorrichtung (1) an einem Plattenelement (3), vorzugsweise eines Einrichtungsgegenstandes, mit einem Grundkörper (4) der eine erste Anlagefläche (4a) bildet und mit einer Verstelleinrichtung (5),
- wobei die Verstelleinrichtung (5) eine der ersten Anlagefläche (4a) gegenüberliegende zweite Anlagefläche (4b) aufweist;
- wobei zwischen der ersten Anlagefläche (4a) und der gegenüberliegen zweiten Anlagefläche (4b) ein Abstand (D) gebildet ist,
- wobei das Plattenelement (3) zwischen den Anlageflächen (4a,4b) aufnehmbar ist, und
- wobei der Abstand (D) der zweiten Anlagefläche (4b) relativ zu der ersten Anlagefläche (4a) über die Verstelleinrichtung (5) einstellbar ist, **dadurch gekennzeichnet, dass**
- die Verstelleinrichtung (5) eine Klemmeinrichtung (52) mit einer Klemmfläche (53) aufweist, wobei die Klemmfläche (53) gegenüber der zweiten Anlagefläche (4b) in Richtung des Plattenelements (3) zur Aufbringung einer Klemmkraft verstellbar ist und das Plattenelement (3) zwischen der ersten Anlagefläche (4a) und der Klemmfläche (53) mittels der Klemmkraft klemmbar ist.

2. Befestigungsvorrichtung (2) nach Anspruch 1, **dadurch gekennzeichnet, dass** die Verstelleinrichtung (5) einen Führungskörper (54), sowie eine gegenüber dem Führungskörper (54) verschiebbare Anlageeinrichtung (55) aufweist, wobei die zweite Anlagefläche (4b) an einer dem Plattenelement (3) zugewandten Fläche der Anlageeinrichtung (55) ausgebildet ist und wobei durch Verschiebung der Anlageeinrichtung (55) relativ zu dem Führungskörper (54) der Abstand (D) zwischen der ersten und zweiten Anlagefläche (4a,4b) einstellbar ist.

3. Befestigungsvorrichtung (2) nach Anspruch 2, **dadurch gekennzeichnet, dass** die Anlageeinrichtung (55) und der Führungskörper (54) gegenüberliegende zueinander gewandte aneinander angepasste erste und zweite Rampen (57a,57b) aufweisen, wobei die Rampen (57a,57b) aneinander anliegen.

4. Befestigungsvorrichtung (2) nach Anspruch 3, **dadurch gekennzeichnet, dass** die ersten und zweiten Rampen (57a,57b) jeweils aneinander angepasste Rastprofile (58a,58b) aufweisen, worüber der Abstand (D) zwischen der ersten und zweiten Anlagefläche (4a,4b) stufenweise einstellbar ist.

5. Befestigungsvorrichtung (2) nach Anspruch 4, **dadurch gekennzeichnet, dass** die aneinander angepassten Rastprofile (58a,58b) als Stufenprofile (59a,59b) ausgebildet sind.

6. Befestigungsvorrichtung (2) nach einem der Ansprüche 2 bis 5, **dadurch gekennzeichnet, dass** der Führungskörper (54) eine Begrenzungseinrichtung und die Anlageeinrichtung (55) eine an die Begrenzungseinrichtung angepasste Anschlageinrichtung aufweist, wobei die Begrenzungseinrichtung zusammen mit der Anschlageinrichtung die Verschiebung der Anlageeinrichtung (55) relativ zu dem Führungskörper (54) begrenzt.

7. Befestigungsvorrichtung (2) nach einem der vorhergehenden Ansprüche, **dadurch gekennzeichnet, dass** die Klemmeinrichtung (52) eine Exzenterwalze (521) mit kreisförmigen Querschnitt und einer Exzenterwalzenoberfläche (523) aufweist, welche die Klemmfläche (53) bildet, wobei die Exzenterwalze (521) im Bereich der zweiten Anlagefläche (4b) an der Anlageeinrichtung (55) drehbar um eine exzentrische Rotationsachse (524) gelagert ist.

8. Befestigungsvorrichtung (2) nach Anspruch 7, **dadurch gekennzeichnet, dass** die Exzenterwalze (521) eine erste Ausgangsposition aufweist, in welcher ein erster Abstand zwischen der Exzenterwalzenoberfläche (523) und der Rotationsachse (524) dem zu klemmenden Plattenelement (3) zugewandt ist und/oder eine zweite Klemmposition aufweist in welcher ein zweiter Abstand zwischen der Exzenterwalzenoberfläche (523) und der Rotationsachse (524) dem zu klemmenden Plattenelement (3) zugewandt ist, , wobei der Wert des zweiten Abstandes größer als der Wert des ersten Abstandes ist.

9. Befestigungsvorrichtung (2) nach Anspruch 7 oder 8, **dadurch gekennzeichnet, dass** an der Exzenterwalze (521) ein Betätigungselement (525) ausgebildet ist, mittels dem die Exzenterwalze (521) drehbar ist.

10. Befestigungsvorrichtung (2) nach Anspruch 7 bis 9, **dadurch gekennzeichnet, dass** die Exzenterwalzenoberfläche (523) mindestens einen abgeflachten Oberflächenteilbereich (526) aufweist.

11. Befestigungsvorrichtung (2) nach einem der Ansprüche 7 bis 9, **dadurch gekennzeichnet, dass** die Exzenterwalzenoberfläche (523) bei Ausrichtung des Bereiches des kleinsten Abstands zwischen der Rotationsachse (524) und der Exzenterwalzenoberfläche (523) zu dem Plattenelement (3) bündig mit oder rückgezogen zu der zweiten Anlagefläche (4b) verläuft.

12. Befestigungsvorrichtung (2) nach einem der vorhergehenden Ansprüche, **dadurch gekennzeichnet, dass** die erste und/oder die zweite Anlagefläche (4a,4b) zumindest teilweise eine Reibkraft erhöhende Beschichtung aufweist.

13. Steckdosenvorrichtung zur Befestigung an einem Plattenelement (3) mit einer Befestigungsvorrichtung (2) nach einem der Ansprüche 1 bis 12.
